# EUROPÄISCHE PATENTSCHRIFT

(11) **EP 0 447 750 B1**
(45) Veröffentlichungstag und Bekanntmachung des Hinweises auf die Patenterteilung: **01.09.1993**
(21) Anmeldenummer: 91100622.9
(22) Anmeldetag: 19.01.1991
(51) Int. Cl.: B60T 13/68, B60T 8/00

(54) **Bremsanlage mit wenigstens einem Bremskreis**
Brake system with at least one brake circuit
Système de freinage avec au moins un circuit de freinage

(30) Priorität: 22.05.1990 DE 4016463; 17.03.1990 DE 4008601
(43) Veröffentlichungstag der Anmeldung: 25.09.1991
(73) Patentinhaber: WABCO Vermögensverwaltungs-GmbH, D-30432 Hannover (DE)
(72) Erfinder: Feldmann, Joachim, W-3057 Neustadt 2 (DE); Schult, Manfred, Dr., W-3008 Garbsen 8 (DE); Petersen, Erwin, Dr., W-3050 Wunstorf 1 (DE)
(74) Vertreter: Schrödter, Manfred, Dipl.-Ing.

(56) Entgegenhaltungen:
- EP-A- 0 103 716
- DE-A- 3 215 475
- DE-A- 3 240 276

## Beschreibung

Die Erfindung betrifft eine Bremsanlage mit wenigstens einem durch Zuführung von Bremsdruck betätigten Bremskreis sowie mit einer mechanischen, redundanten Bremsdruck aussteuernden, Bremsdrucksteuereinrichtung und einer elektrischen Bremsdrucksteuereinrichtung gemäß dem Oberbegriff des Patentanspruchs 1.

Eine derartige Bremsanlage wird vorrangig durch die elektrische Bremsdrucksteuereinrichtung betätigt. Bei einer Störung in der elektrischen Bremsdrucksteuereinrichtung bleibt die Bremsanlage mittels des von der mechanischen Bremsdrucksteuereinrichtung ausgesteuerten redundanten Bremsdrucks funktionsfähig.

Eine derartige Bremsanlage ist aus der DE 35 01 179 A1 bekannt. Der Bremsdruckmodulator dieser Bremsanlage ist hinsichtlich des redundanten Bremsdrucks als Sperreinrichtung ausgebildet. Er ist zu diesem Zweck so ausgestaltet, daß er bei Betätigung im Sinne steigenden oder gleichbleibenden Bremsdrucks seinen Durchgang für den redundanten Bremsdruck sperrt und bei Betätigung im Sinne fallenden Bremsdrucks diesen Durchgang öffnet und dadurch über die mechanische Bremsdrucksteuereinrichtung den angestrebten Bremsdruckabfall ermöglicht.

Soll die bekannte Bremsanlage ein oder mehrere Elemente enthalten, die einen besonders schnellen Bremsdruckabfall bedingen, so muß sie, wie zum Beispiel aus Fig.2 der DE 35 01 179 A1 hervorgeht, eine elektrisch gesteuerte Ventileinrichtung aufweisen, die beim Betrieb dieses Elements bzw. dieser Elemente den erforderlichen schnellen Bremsdruckabfall gewährleistet. Derartige Elemente sind beispielsweise eine Blockierschutzanlage und eine überlagernde elektrische oder hydraulische Dauerbremse, üblicherweise Retarder genannt.

Der Erfindung liegt die Aufgabe zugrunde, eine Bremsanlage der eingangs genannten Art ohne eine zusätzliche Einrichtung für den Einsatz von Elementen, die einen besonders schnellen Druckabfall bedingen, vorzubereiten.

Diese Aufgabe wird durch die in dem Patentanspruch 1 angegebene Erfindung gelöst. Vorteilhafte Ausgestaltungen und Weiterbildungen sind in den Unteransprüchen angegeben.

Zur Erfindung gehört, die Magnetstromstärke so einzustellen, daß die auf die Magnetbetätigung zurückgehende Bremsdruckkomponente gerade den Unterschied zwischen der Bremsdruckanforderung und der auf den redundanten Bremsdruck zurückgehenden Bremsdruckkomponente ausmacht.

Zur Überwachung des redundanten Bremsdrucks sind in der bekannten Bremsanlage Testroutinen vorgesehen, in denen bei betätigter Bremsanlage der Bremsdruckmodulator selbsttäig im Sinne fallenden Bremsdrucks betätigt wird. Dadurch kann während der Testroutinen der redundante Bremsdruck als Bremsdruck zum Ausgang des Bremsdruckmodulators durchtreten. Ein zur Überwachung des Bremsdrucks dienender Drucksensor der Steuerelektronik zeigt dann an, in welcher Höhe der redundante Bremsdruck zur Verfügung steht.

Demgegenüber kann die Erfindung mit einfachen Mitteln so forgebildet werden, daß sie bei Bremsbetätigung eine kontinuierliche Überwachung des redundanten Bremsdrucks ermöglicht.

Die Erfindung läßt sich in Verbindung mit allen geeigneten Druckmitteln ausführen.

Die Erfindung läßt sich kostengünstig weitgehend unter Verwendung marktgängiger Geräte ausführen. So ist beispielsweise in einer Ausgestaltung als Bremsdruckmodulator das in der DE 30 38 797 A1 beschriebene Druckregelventil einsetzbar, in einer anderen Ausgestaltung der Bremsdruckmodulator beispielsweise aus einem üblichen Magnet-Proportionalventil und einer üblichen aufstockenden Zweikreis-Relaisventileinrichtung herstellbar.

Weitere Vorteile der Erfindung werden in deren nun folgender Erläuterung anhand von in Zeichnungen dargestellten Ausführungsbeipielen genannt.

Unter durchgehender Verwendung durchgezogener und gestrichelter Linien für Druckmittelleitungen und sonstige Bauteile sowie strichpunktierter Linien für elektrische Verbindungen sowie einheitlicher Bezugszeichen für Bauteile mit gleichen Funktionen zeigen:
- **Fig.1**: eine Prinzipskizze einer Bremsanlage eines Zugfahrzeugs,
- **Fig.2**: eine Fortbildung derselben,
- **Fig.3**: eine Prinzipskizze einer Bremsanlage eines Anhängers,
- **Fig.4**: Fig.1 mit einer anderen Ausgestaltung des Bremsdruckmodulators.

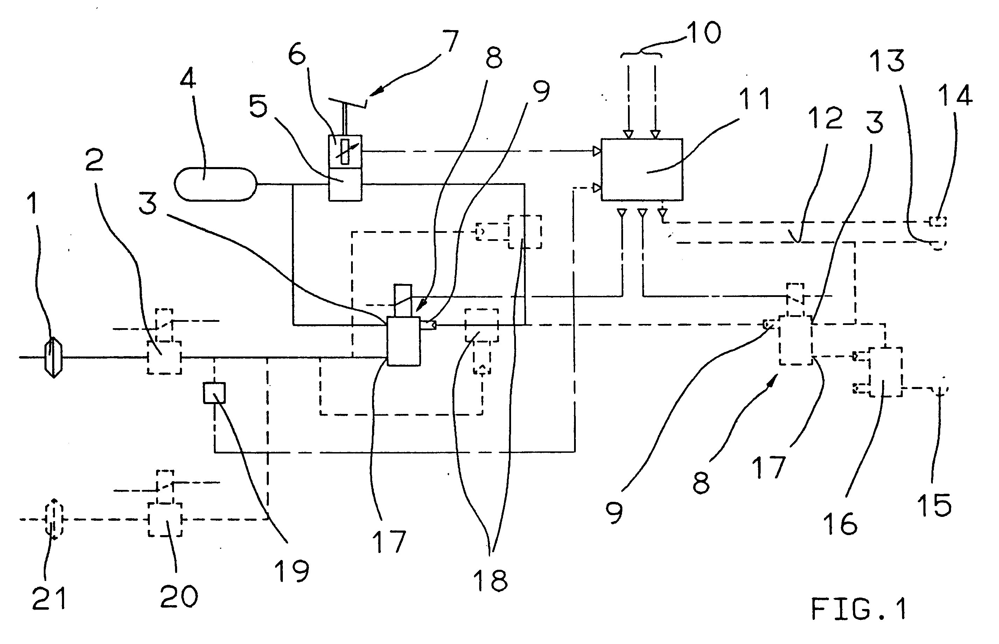

Fig.1 zeigt in durchgezogenen Linien schematisch die Grundausführung einer Bremsanlage eines Zugfahrzeugs mit einem durch Zuführung von Bremsdruck betätigten Bremskreis mit einer Zuspanneinrichtung (1) sowie mit einer mechanischen Bremsdrucksteuereinrichtung (5) und einer elektrischen Bremsdrucksteuereinrichtung (6, 8, 11, 19). Als Druckmittel dient Luft. Bei entsprechender Anpassung gelten die nachstehenden Ausführungen jedoch für andere Druckmittel einsetzende Bremsanlagen mit.

Die mechanische Bremsdrucksteuereinrichtung besteht aus dem Druckteil (5) eines Bremswertgebers (7). Die elektrische Bremsdrucksteuereinrichtung (6, 8, 11, 19) besteht aus einem elektrischen Teil (6) des Bremswertgebers (7), einer Steuerelektronik (11, 19), zu der eine Steuerschaltung (11) und ein Bremsdrucksensor (19) gehören, und einem Bremsdruckmodulator (8).

Die erwähnten Bauteile der Bremsanlage sind mit Ausnahme der Steuerschaltung (11) von bekannten Bauarten.

Der Bremsdruckmodulator (8) ist an einem Eingang (3) mit einem Druckvorrat (4) und an seinem Ausgang (17) mit der Zuspanneinrichtung (1) verbunden. Er ist magnet- und druckbetätigt. Zur Druckbetätigung weist er eine Steuereinrichtung auf, die über einen anderen Eingang (9) mit dem Ausgang des Druckteils (5) des Bremswertgebers (7) verbunden und folglich mit dem redundanten Bremsdruck beaufschlagt ist. Zur Magnetbetätigung weist er einen nicht näher bezeichneten Betätigungsmagneten auf. Bei Betätigung durch eine der oder durch beide Betätigungseinrichtungen verbindet der Druckmodulator (8) die Zuspanneinrichtung (1) mit dem Druckvorrat (4), bis sich in der Zuspanneinrichtung (1) ein Bremsdruck aufgebaut hat, dessen Höhe sich sowohl nach dem zugeführten Magnetstrom als auch nach der Höhe des redundanten Bremsdrucks bemißt.

Der von dem Bremsdruckmodulator (8) abgegebene Bremsdruck setzt sich also aus einer auf den redundanten Bremsdruck und aus einer auf die Magnetbetätigung zurückgehenden Bremsdruckkomponente zusammen. Je nach Ausgestaltung der zur Druckbetätigung vorgesehenen Steuereinrichtung des Bremsdruckmodulators (8) kann die auf den redundanten Bremsdruck zurückgehende Bremsdruckkomponente dem redundanten Bremsdruck gleich oder diesem gegenüber untersetzt oder übersetzt, d.h. geringer oder höher als der redundante Bremsdruck, sein.

Als Bremsdruckmodulator (8) kann beispielsweise das in der DE 30 38 797 A1 beschriebene Druckregelventil eingesetzt werden. Dieses wird durch Verbindung seines Entlüftungsanschlusses mit dem Ausgang des Druckteils (5) des Bremswertgebers (7) im Sinne der vorliegenden Erfindung druckbetätigt. Dieser Bremsdruckmodulator bemißt den Bremsdruck durch Addition der auf seine einzelnen Betätigungseinrichtungen zurückgehenden Bremsdruckkomponenten. Es ist aber auch jede geeignete andere Art der Bremsdruckbemessung einsetzbar.

Der Drucksensor (19) überwacht am Ausgang (17) des Bremsdruckmodulators (8) den von diesem an die Zuspanneinrichtung (1) abgegebenen Bremsdruck und liefert der Steuerschaltung (11) ein entsprechendes Bremsdrucksignal.

Der Bremswertgeber (7) gibt bei Betätigung durch den Fahrer an seinem elektrischen Teil (6) ein von der Betätigungskraft oder von dem Betätigungsweg abhängiges elektrisches Signal, nachstehend Betätigungssignal, ab; gleichzeitig steuert er an seinem Druckteil (5) aus dem Druckvorrat (4) den ebenfalls von den genannten Betätigungsgrößen abhängigen redundanten Bremsdruck aus. "Mechanisch" wird die von dem Druckteil (5) repräsentierte Bremsdrucksteuereinrichtung deshalb genannt, weil diese die in den Bremswertgeber (7) eingeleiteten Betätigungsgrößen in bekannter Weise mit mechanischen Mitteln in den redundanten Bremsdruck umsetzt.

Die Steuerschaltung (11) empfängt das Betätigungssignal des elektrischen Teils (6) des Bremswertgebers (7) und das Bremsdrucksignal des Drucksensors (19) und gibt an die Magnetbetätigung des Bremsdruckmodulators (8) den zu dessen Betätigung erforderlichen Magnetstrom ab. In der Grundausführung wertet die Steuerschaltung (11) das Betätigungssignal als Bremsdruckanforderungssignal, vergleicht dieses mit dem Bremsdrucksignal und stellt im Falle einer Abweichung die Magnetstromstärke auf den zur Beseitiung der Abweichung, d.h. auf einen zur Deckung der jeweiligen Bremsdruckanforderung erforderlichen, Wert ein. Mit anderen Worten: Die Steuerschaltung (11) stellt die Magnetstromstärke so ein, daß die auf die Magnetbetätigung zurückgehende Bremsdruckkomponente gerade die Differenz zwischen der Bremsdruckanforderung und der auf den redundanten Bremsdruck zurückgehenden Bremsdruckkomponente ausmacht.

Die elektrische Bremsdrucksteuereinrichtung (6, 8, 11, 19) und/oder die mechanische Bremsdrucksteuereinrichtung (8) können so ausgebildet sein, daß wenigstens im Teilbremsbereich die Bremsdruckanforderung höher ist als der redundante Bremsdruck, so daß wenigstens im Teilbremsbereich immer eine auf die Magnetbetätigung zurückgehende Bremsdruckkomponente auftritt und bei einer Vollbremsung der Bremswertgeber (7) eine deutlich erhöhte Betätigungskraft oder einen deutlich erhöhten Betätigungsweg zur Ansteuerung des vollen Vorratsdruckes als redundanten Bremsdruck erfordert.

Als Fortbildung kann in der Steuerschaltung (11) außerdem ein Soll-Bereich für die gegenseitige Zuordnung von Magnetstromstärke und Bremsdruck bei ordnungsgemäßem Funktionieren des Druckteils (5) und der Druckbetätigung des Bremsdruckmodulators (8) gespeichert sein. Die Steuerschaltung (11) kann in diesem Fall auch derart ausgebildet sein, daß sie unter Heranziehung des Bremsdrucksignals die Lage der Magnetstromstärke bezüglich des Soll-Bereichs feststellt und ein Warnsignal abgibt, wenn die Magnetstromstärke den Soll-Bereich verläßt. Aufgrund dieser Ausbildung kann die Steuerelektronik (11, 19) zugleich der Überwachung des redundanten Bremsdrucks und damit des Druckteils (5) und der Druckbetätigung des Druckmodulators (8) auf Intaktheit dienen, denn eine aus dem Soll-Bereich herausfallende Magnetstromstärke deutet auf eine zu hohe oder zu geringe auf den redundanten Bremsdruck zurückgehende Bremsdruckkomponente und damit auf Störungen des Druckteils (5) und/oder der Druckbetätigung des Druckmodulators (8) und/oder zugeordneter Druckmittelleitungen hin.

Über die vorstehend beschriebene Grundausführung und die vorstehend beschriebene Fortbildung hinaus zeigt Fig.1 gestrichelt noch weitere Fortbildungen der Erfindung.

Durch eine weitere Zuspanneinrichtung (21) ist angedeutet, daß der Bremskreis auch mehrere Zuspanneinrichtungen aufweisen kann. Die weiteren Zuspanneinrichtungen können, wie dargestellt, an den Bremsdruckmodulator (8) der Grundausrüstung angeschlossen sein, es können aber auch für jede einzelne ein eigener oder in mehrere zusammengefaßt eigene Bremsdruckmodulatoren vorgesehen sein.

Durch Regelventile (2) bzw. (20) einer im übrigen nicht dargestellten Blockierschutzanlage, nachstehend kurz ABS-Ventile genannt, ist angedeutet, daß die Bremsanlage auch mit einer Blockierschutzanlage ausgerüstet sein kann. In diesem Fall können die Bremsdrücke in der/den Zuspanneinrichtung(en) (1) bzw. (21) und am Ausgang (17) des Bremsdruckmodulators (8) unterschiedlich sein. Deren Steuerelektronik kann ganz oder teilweise mit der Steuerschaltung (11) vereinigt sein.

Die ABS-Ventile (2) bzw. (20) haben in bekannter Weise eine eigene Entlüftungseinrichtung. Sie sind, wie dargestellt, zwischen dem Ausgang (17) des Druckmodulators (8) und der bzw. den Zuspanneinrichtungen (1, 21) angeordnet. Deshalb ermöglichen sie im Bedarfsfall einen Bremsdruckabfall in der bzw. den Zuspanneinrichtungen (1, 21) auf kürzestem Wege und dadurch ohne weitere Einrichtungen sehr schnell.

Durch das Bezugszeichen (10) ist wenigstens ein weiterer Signalgeber angedeutet, dessen Signal die Steuerschaltung (11) außer dem Betätigungssignal des elektrischen Teils (6) des Bremswertgebers (7) bei der Ermittlung der Bremsdruckanforderung auswertet. Als solcher Signalgeber kommen beispielsweise ein oder mehrere Lastsensoren infrage, wenn die in diesem Fall mit (6, 8, 10, 11, 19) zu bezeichnende elektrische Bremsdrucksteuereinrichtung einen lastabhängigen Bremsdruckregler enthält. Als zusätzliche oder alternative Signalgeber kommen beispielsweise, jeweils ein oder mehrere, Retardersensor(en), Deichselkraftsensor(en), Bremsmomentensensor(en), Bremstemperatursensor(en) und ähnliches in Betracht. In dieser Fortbildung kann es vorkommen, daß schon die auf den redundanten Bremsdruck zurückgehende Bremsdruckkomponente die Bremskraftanforderung übersteigt. Eine Anpassung ist durch die Anordnung einer durch (18) angedeuteten Rückhalteeinrichtung in der dann mit (5, 18) zu bezeichnenden mechanischen Bremsdrucksteuereinrichtung möglich, welche Rückhalteeinrichtung (18) den redundanten Bremsdruck bis zu einem vorbestimmten Rückhaltedruck zurückhält.

Der Rückhaltedruck kann nach den Erfordernissen des speziellen Einsatzfalls ein fester Druckwert oder variabel sein. Ein fester Druckwert ergibt sich beim Einsatz eines üblichen Überströmventils als Rückhalteeinrichtung. Ein variabler Rückhaltedruck kann beispielsweise durch Einsatz einer Rückhalteeinrichtung nach den Prinzipien der Anpassungsventile gemäß den WABCO-Druckschriften 975 001, Ausgabe März 1977, oder 975 002, Ausgabe August 1973, erzielt werden. Eine andere beispielhafte Möglichkeit, den Rückhaltedruck variabel zu gestalten, ist die Ausführung der Rückhalteeinrichtung nach dem Prinzip des in der WABCO-Druckschrift 973 300, Ausgabe Januar 1974, dargestellten Last/Leer-Ventils. Wie dargestellt, könnte in diesem Fall der Bremsdruck dem Steuereingang des Last/Leer-Ventils zugeführt werden. Diese Ausgestaltung läßt sich, wenn die elektrische Bremsdrucksteuereinrichtung einen lastabhängigen Bremsdruckregler enthält, speziell auf diesen zuschneiden, indem das Last/Leer-Ventil so ausgelegt wird, daß der Rückhaltedruck höchstens gleich dem von dem Bremsdruckmodulator (8) bei leerem Fahrzeug abgegebenen Bremsdruck ist.

Durch eine Rückhalteeinrichtung läßt sich auch der gesamte Bremsdruckbereich in einen Teilbereich mit verschleißoptimiertem Bremsen und einen Teilbereich, in dem es mehr auf die Ausnutzung des vorhandenen Bremspotentials ankommt, aufteilen. Der redundante Bremsdruck liegt in dem erstgenannten Teilbereich unter, in dem zweiten Teilbereich über dem Rückhaltedruck.

Als weitere Fortbildung enthält das Ausführungsbeispiel eine Einrichtung zur Mitsteuerung einer Anhängerbremsanlage. Diese besteht aus einer Vorratsleitung (12) mit Vorratskupplung (13) sowie einer elektrischen und einer druckbetätigten Steuereinrichtung. Die elektrische Steuereinrichtung besteht aus einem Steueranschluß (14) und der Steuerschaltung (11), die zu diesem Zweck so fortgebildet ist, daß sie das von dem elektrischen Teil (6) des Bremswertgebers (7) empfangene Betätigungssignal und, gegebenenfalls, eines Teils der oder aller Signalgeber (10) zu einem Anhänger-Bremssignal umsetzt. Die druckbetätigte Steuereinrichtung besteht aus einem Anhängersteuerventil (16) und einem zusätzlichen Bremsdruckmodulator. Das Anhängersteuerventil (16) entspricht den üblichen druckbetätigten Bauarten. Es ist vorratsseitig an die Vorratsleitung (12) angeschlossen und gibt bei Betätigung einen Anhängersteuerdruck an eine Anängerbremsleitung mit einer Bremskupplung (15) ab. Der zusätzliche Bremsdruckmodulator entspricht prinzipiell dem oben beschriebenen Bremsdruckmodulator (8), ist jedoch zum Teil anders als jener eingebaut; er ist an seinem ersten Eingang (3) mit der Vorratsleitung (12) und an seinem Ausgang (17) mit einer Drucksteuereinrichtung des Anhängersteuerventils (16) verbunden. In nicht dargestellter Weise kann der Ausgang (17) des zusätzlichen Bremsdruckmodulators (8) auch direkt mit der Anhängerbremsleitung verbunden sein. Die Magnetbetätigung dieses Bremsdruckmodulators (8) wird ebenfalls von der entsprechend ausgebildeten Steuerschaltung (11) mit Magnetstrom versorgt.

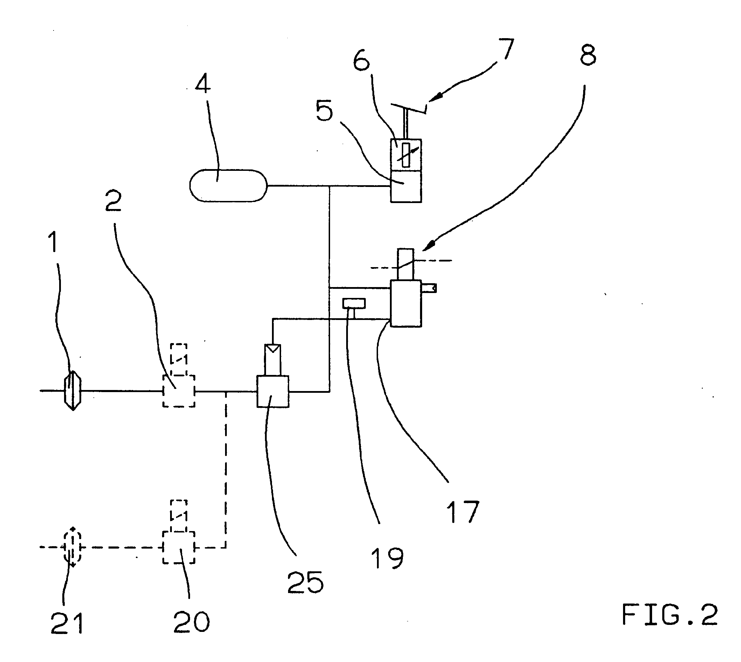

Fig.2 zeigt ausschnittsweise eine weitere Fortbildung des Ausführungsbeispiels nach Fig.1. Die Fortbildung besteht darin, daß der Bremskreis ein Relaisventil (25) enthält, welches in üblicher Weise der Zuspanneinrichtung (1) bzw. den Zuspanneinrichtungen (1, 21) vorgeschaltet ist und dessen Steuereinrichtung der von dem Bremsdruckmodulator (8) abgegebene Bremsdruck als Steuerdruck zugeführt wird.

Der Bremsdrucksensor (19) ist am Ausgang des Bremsdruckmodulators (8) dargestellt, kann aber auch am Ausgang des Relaisventils (25) angeordnet sein.

Im übrigen gelten für diese Fortbildung die zu Fig.1 gemachten Ausführungen identisch oder entsprechend.

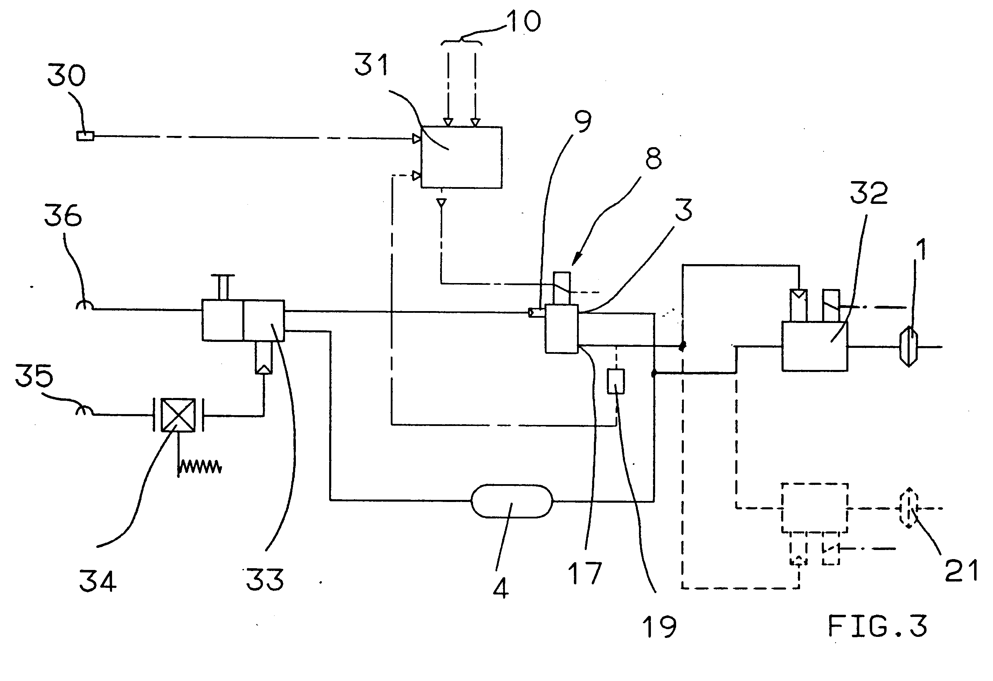

Fig.3 zeigt in durchgezogenen Linien schematisch die Grundausführung einer Bremsanlage eines Anhängers.

Die mechanische Bremsdrucksteuereinrichtung (33, 34) besteht in diesem Fall aus einem Anhängerbremsventil (33) und einem lastabhängigen Bremsdruckregler (34). Beide sind von bekannten Bauarten und in üblicher Weise angeordnet. Folglich dient das Anhängerbremsventil (33) zugleich zur Fortleitung des über eine Vorratskupplung (36) vom Zugfahrzeug herangeführten Druckmittels an den Druckvorrat (4) und wird es über eine Bremskupplung (35) und eine Steuerleitung, in der auch der lastabhängige Bremsdruckregler (3) angeordnet ist, angesteuert.

Je nach Einsatzfall kann der lastabhängige Bremsdruckregler (34) auch entfallen.

Die elektrische Bremsdrucksteuereinrichtung (30, 8, 31, 19) besteht aus einem elektrischen Steueranschluß (30), der Steuerelektronik (31, 19), zu der eine Steuerschaltung (31) und ein Drucksensor (19) gehören, und einem Bremsdruckmodulator. Der wieder mit (8) bezeichnete Bremsdruckmodulator und der wieder mit (19) bezeichnete Bremsdrucksensor entsprechen prinzipiell den gleich bezeichneten Bauteilen des früheren Ausführungsbeispiels. Der Steueranschluß (30) nimmt das im Zugfahrzeug erzeugte Anhängerbremssignal auf und führt dieses der Steuerschaltung (31) zu. Der Bremsdruckmodulator (8) ist an seinem einen Eingang (3) mit dem Druckvorrat (4) und an seinem anderen Eingang (9) mit dem Ausgang des Anhängerbremsventils (33) verbunden. An seinem Ausgang (17) ist der Bremswertmodulator (8) mit der Drucksteuereinrichtung eines Relaisventils (32) verbunden, welches außerdem eine Magnetbetätigung aufweist und dadurch zugleich ein magnetgesteuertes Regelventil einer Blockierschutzanlage ist. Ein solches Regelventil, auch ABS-Relaisventil genannt, ist beispielsweise in der DE 37 30 779 A1 beschrieben.

Hinsichtlich der Funktionsweise dieses Ausführungsbeispiels gelten die zu dem früheren Ausführungsbeispiel in der Fortbildung nach Fig.2 gegebenen Erläuterungen identisch oder entsprechend, wobei das Anhängerbremssignal dem Betätigungssignal des elektrischen Teils (6) des Bremswertgebers (7) gleichzusetzen ist.

Der Fachmann erkennt, daß sich dieses Ausführungsbeispiel im Bereich des ABS-Relaisventils (32) auf die Grundausführung und Fortbildungen der Fig.1 und Fig.2 rückbilden läßt und daß sich andererseits letzteres insoweit auf die Ausgestaltung dieses Ausführungsbeispiels fortbilden lassen.

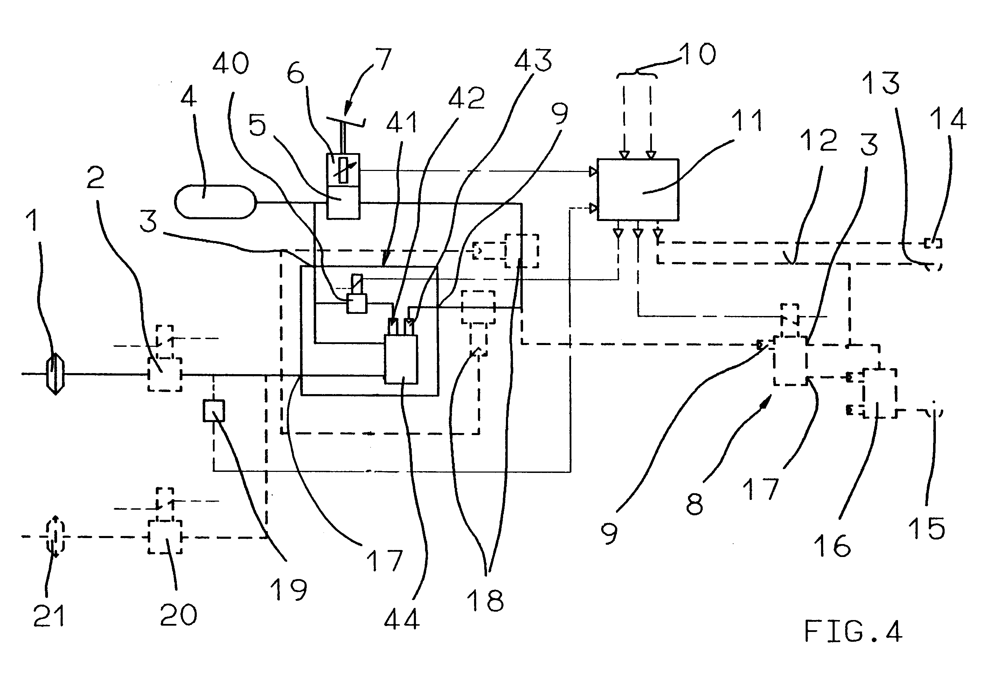

Fig.4 zeigt das Ausführungsbeispiel gemäß Fig.1 mit einer anderen Ausgestaltung des Bremsdruckmodulators.

Der hier generell mit (41) bezeichnete Bremsdruckmodulator besteht aus einer Zweikreis-Relaisventileinrichtung (44) und einer magnetbetätigten Ventileinrichtung (40). Die Zweikreis-Relaisventileinrichtung (44) ist von einer marktgängigen aufstockenden Bauart. Dabei bedeutet "aufstockend", daß sie bei gleichzeitiger Druckbeaufschlagung ihrer beiden Steuereinrichtungen an ihrem Ausgang einen höheren Druck als bei Druckbeaufschlagung nur einer ihrer Steuereinrichtungen abgibt.

Die Ventileinrichtung (40) ist in bekannter Weise so ausgebildet, daß sie einen von der zugeführten Magnetstromstärke abhängigen Druck aussteuert. Als solche ist beispielsweise ein marktgängiges Magnet-Proportionalventil einsetzbar. Durch einen beide genannten Ventileinrichtungen (40) und (44) umfassenden Linienzug ist angedeutet, daß diese zur Bildung des Bremsdruckmodulators (41) zusammengebaut sind. Sie können die Funktion des Bremsdruckmodulators (41) selbstverständlich aber auch als entsprechend druckseitig miteinander verbundene Einzelgeräte erfüllen.

Der eine Eingang (3), der andere Eingang (9) und der Ausgang (17) des Bremsdruckmodulators (41) sind als Anschlußpunkte der entsprechenden Druckmittelleitungen an den erwähnten Linienzug dargestellt; bei getrennter Anordnung der Ventileinrichtung (40) und der Zweikreis-Relaisventileinrichtung (44) können die Eingänge (3) und (9) sowie der Ausgang (17) mit Anschlüssen der Ventileinrichtung (40) bzw. der Zweikreis-Relaisventileinrichtung (44) zusammenfallen.

Die Ventileinrichtung (40) ist an ihrem Druckmitteleingang mit dem einen Eingang (3) verbunden. Die Zweikreis-Relaisventileinrichtung (44) ist an ihrem Vorratsanschluß ebenfalls mit dem einen Eingang (3), an ihrer einen Steuereinrichtung (42) mit dem Ausgang der Ventileinrichtung (40), an ihrer anderen Steuereinrichtung (43) mit dem zweiten Eingang (9) und an ihrem Ausgang mit dem Ausgang (17) verbunden.

Der Betätigungsmagnet der Ventileinrichtung (40) stellt die Magnetbetätigung des Bremsdruckmodulators (41) dar.

Aufgrund der Verbindungen ihrer Steuereinrichtungen (42) und (43) mit der Ventileinrichtung (40) bzw., über den anderen Eingang (9), mit der mechanischen Bremsdrucksteuereinrichtung (5) bzw. (5, 18) wird die Zweikreis-Relaisventileinrichtung (44) sowohl von dem von der Ventileinrichtung (40) ausgesteuerten Druck als auch von dem von der mechanischen Bremsdrucksteuereinrichtung (5) bzw. (5, 18) abgegebenen Druck gesteuert. Da der von der Ventileinrichtung (40) abgegebene Druck von der dem Betätigungsmagneten zugeführten Stromstarke abhängt, ist die Steuerung der Zweikreis-Relaisventileinrichtung (44) an der Steuereinrichtung (42) von dieser Magnetstromstärke abhängig.

Wegen der aufstockenden Bauart der Zweikreis-Relaisventileinrichtung (44) erbringen die Ventileinrichtung (40) und die Zweikreis-Relaisventileinrichtung (44) in Verbindung miteinander die gleichen Funktionen wie der Bremsdruckmodulator (8) des Ausführungsbeispiels gemäß Fig.1.

In nicht näher dargestellter Weise kann der Bremsdruckmodulator (8) auch in den anderen vorstehend erwähnten Anordnungen und allgemein, gegebenenfalls mit einfachen Anpassungsmaßnahmen, durch den Bremsdruckmodulator (41) ersetzt werden.

Im übrigen gelten, soweit sich aus Vorstehendem nichts anderes ergibt, die zu einem Ausführungsbeispiel gemachten Ausführungen für das andere Ausführungsbeispiel identisch oder in entsprechender Anwendung mit.

Der Fachmann erkennt, daß sich der Schutzbereich der Erfindung nicht in den beschriebenen Ausführungsbeispielen erschöpft, sondern vielmehr alle Ausgestaltungen umfaßt, deren Merkmale sich den Patentansprüchen unterordnen.

## Patentansprüche

1. Bremsanlage mit wenigstens einem durch Zuführung von Bremsdruck betätigten Bremskreis sowie mit einer mechanischen, redundanten Bremsdruck aussteuernden, Bremsdrucksteuereinrichtung (5; 5,18; 33, 34) und einer elektrischen Bremsdrucksteuereinrichtung (6, 8, 11, 19; 6, 8, 10, 11, 19; 6, 41, 11, 19; 6, 41, 10, 11, 19; 30, 8, 31, 19; 30, 8, 10, 31, 19), zu der wenigstens ein, dem Bremskreis zugeordneter, magnetbetätigter Bremsdruckmodulator (8; 41) und eine den Bremsdruckmodulator (8; 41) steuernde Steuerelektronik (11, 19; 31, 19) gehören, wobei der Bremsdruckmodulator (8; 41) an einem Eingang (3) mit einem Druckvorrat (4), an einem anderen Eingang (9) mit der mechanischen Bremsdrucksteuereinrichtung (5; 5, 18; 33, 34) und an seinem den Bremsdruck abgebenden Ausgang (17) mit dem Bremskreis verbunden ist,
dadurch gekennzeichnet,
daß der Bremsdruckmodulator (8; 41) von einer auch druckgesteuerten Bauart ist, die den Bremsdruck sowohl nach der zugeführten Magnetstromstärke als auch nach der Höhe des redundanten Bremsdrucks bemißt, und daß die Steuerelektronik (11, 19; 31, 19) derart ausgebildet ist, daß sie die Magnetstromstärke auf einen zur Deckung der jeweiligen Bremsdruckanforderung erforderlichen Wert einstellt.

2. Bremsanlage nach Anspruch 1, dadurch gekennzeichnet, daß die Steuerelektronik (11, 19; 31, 19) ein Warnsignal abgibt, wenn die Magnetstromstärke einen vorbestimmten Soll-Bereich verläßt.

3. Bremsanlage nach einemder Ansprüche 1 oder 2, dadurch gekennzeichnet, daß der Bremsdruckmodulator (41) aus einer Zweikreis-Relaisventileinrichtung (44) und einer einen von der zugeführten Magentstromstärke abhängigen Druck abgebenden, an ihrem Eingang mit dem einen Eingang (3) verbundenen, magnetbetätigten Ventileinrichtung (40) besteht, wobei die Relaisventileinrichtung (44) an ihrer einen Steuereinrichtung (42) mit dem Ausgang der magnetbetätigten Ventileinrichtung (40), an ihrer anderen Steuereinrichtung (43) mit dem anderen Eingang (9), an ihrem Ausgang mit dem Ausgang (17) und an ihrem Vorratsanschluß mit dem einen Eingang (3) verbunden ist.

4. Bremsanlage nach einem der vorhergehenden Ansprüche, dadurch gekennzeichnet, daß die mechanische Bremsdrucksteuereinrichtung (5; 18) eine Rückhalteeinrichtung (18) aufweist, die den redundanten Bremsdruck bis zu einem vorbestimmten Rückhaltedruck zurückhält.

5. Bremsanlage nach Anspruch 4, dadurch gekennzeichnet, daß der Rückhaltedruck eine Funktion des von dem Bremsdruckmodulator (8; 41) abgegebenen Bremsdruckes ist.

6. Bremsanlage nach einem der Ansprüche 4 oder 5, worin die elektrische Bremsdrucksteuereinrichtung (6, 8, 10, 11, 19) einen lastabhängigen Bremsdruckregler enthält, dadurch gekennzeichnet, daß der Rückhaltedruck höchstens gleich dem von dem Bremsdruckmodulator (8; 41) bei leerem Fahrzeug abgegebenen Bremsdruck ist.

7. Bremsanlage nach einem der Ansprüche 4 oder 6, dadurch gekennzeichnet, daß die Rückhalteeinrichtung (18) ein Überströmventil ist.

8. Bremsanlage nach einem der Ansprüche 4 bis 6, dadurch gekennzeichnet, daß die Rückhalteeinrichtung (18) ein Last/Leer-Ventil ist.

9. Bremsanlage nach einem der vorhergehenden Ansprüche, dadurch gekennzeichnet, daß wenigstens im Teilbremsbereich die Bremsdruckanforderung großer als der redundante Bremsdruck ist.

10. Bremsanlage nach einem der vorhergehenden Ansprüche, dadurch gekennzeichnet, daß der Bremskreis wenigstens ein Relaisventil (25; 32) enthält, dessen Steuereinrichtung der von dem Bremsdruckmodulator (8; 41) abgegebene Bremsdruck als Steuerdruck zugeführt wird.

11. Bremsanlage nach Anspruch 10, dadurch gekennzeichnet, daß das Relaisventil (32) zugleich ein magnetgesteuertes Regelventil einer Blockierschutzanlage ist.

12. Bremsanlage nach einem der vorhergehenden Ansprüche, mit einem druckgesteuerten Anhänger-Steuerventil (16), dadurch gekennzeichnet, daß ein zusätzlicher Bremsdruckmodulator (8; 41) der im Anspruch 1 spezifizierten Art vorgesehen ist und daß eine Drucksteuereinrichtung des Anhänger-Steuerventils (16) mit dem Ausgang (17) des zusätzlichen Bremsdruckmodulators (8; 41) verbunden ist.

## Claims

1. Installation de freinage comportant : au moins un circuit de freinage actionné par amenée d'une pression de freinage; un dispositif mécanique de commande de pression de freinage redondante (5; 5, 18; 33, 34) et un dispositif électrique de commande de pression de freinage (6, 8, 11,19; 6, 8, 10, 11, 19; 6, 41, 11, 19; 6, 41, 10, 11, 19; 30, 8, 31, 19; 30, 8, 10, 31, 19) auquel appartiennent au moins un modulateur de pression de freinage (8; 41) conjugué au circuit de freinage et actionné magnétiquement; et une électronique de commande (11, 19; 31, 19) commandant le modulateur de pression de freinage (8; 41); le modulateur de pression de freinage (8; 41) ayant une première entrée (3) reliée à une réserve de pression (4), une autre entrée (9) reliée au dispositif mécanique de commande de pression de freinage (5; 5, 18; 33, 34), et sa sortie (17) délivrant la pression de freinage étant reliée au circuit de freinage,
caractérisée
par le fait que le modulateur de pression de freinage (8; 41) est d'un type également commandé par pression, qui dose la pression de freinage aussi bien en fonction du courant magnétisant appliqué qu'en fonction du niveau de la pression de freinage redondante, et par le fait que l'électronique de commande (11, 19; 31, 19) est réalisée de manière à régler l'intensité du courant magnétisant à une valeur nécessaire pour couvrir la demande de pression de freinage dans chaque cas.

2. Installation de freinage selon revendication 1, caractérisée par le fait que l'électronique de commande (11, 19; 31, 19) délivre un signal d'avertissement si l'intensité du courant magnétisant sort du domaine de consigne prédéterminé.

3. Installation de freinage selon l'une des revendications 1 ou 2, caractérisée par le fait que le modulateur de pression de freinage (41) est constitué par un dispositif de vanne-relais à deux circuits (44) et par un dispositif de vanne (40) actionné magnétiquement, délivrant une pression dépendant de l'intensité du courant magnétisant amené et ayant son entrée reliée à ladite première entrée (3), le dispositif de vanne-relais (44) ayant son premier dispositif de commande (42)relié à la sortie du dispositif de vanne actionné magnétiquement (40), son autre dispositif de commande (43) relié à l'autre entrée (9), sa sortie reliée à la sortie (17), et en son raccord de réserve relié à la première entrée (3).

4. Installation de freinage selon l'une des revendications précédentes, caractérisée par le fait que le dispositif de commande mécanique de pression de freinage (5, 18) présente un dispositif de retenue qui retient la pression de freinage redondante jusqu'à une pression de retenue prédéterminée.

5. Installation de freinage selon la revendication 4, caractérisée par le fait que la pression de retenue est une fonction de la pression de freinage délivrée par le modulateur de pression de freinage (8; 41).

6. Installation de freinage selon l'une de revendications 4 ou 5, dans laquelle le dispositif de commande électrique de pression de freinage (6, 8, 10, 11, 19) comporte un régulateur de pression de freinage en fonction de la charge, caractérisée par le fait que la pression de retenue est au plus égale à la pression de freinage que le modulateur de pression de freinage (8; 41) délivre lorsque le véhicule est vide.

7. Installation de freinage selon l'une des revendications 4 ou 6, caractérisée par le fait que le dispositif de retenue (18) est une vanne ou soupape de décharge.

8. Installation de freinage selon l'une des revendications 4 à 6, caractérisée par le fait que le dispositif de retenue (18) est une vanne charge/vide.

9. Installation de freinage selon l'une des revendications précédentes, caractérisée par le fait qu'au moins dans le domaine de freinage partiel, la demande de pression de freinage est plus grande que la pression de freinage redondante.

10. Installation de freinage selon l'une des revendications précédentes, caractérisée par le fait que le circuit de freinage contient au moins une vanne-relais (25; 32) au dispositif de commande de laquelle est amenée, en tant que pression de commande, la pression de freinage délivrée par le modulateur de pression de freinage (8; 41).

11. Installation de freinage selon revendication 10, caractérisée par le fait que la vanne-relais (32) est en même temps une vanne de réglage, commandée magnétiquement, d'une installation antiblocage (4).

12. Installation de freinage selon l'une des revendications précédentes, avec une vanne de commande de remorque (16) commandée par pression, caractérisée par le fait qu'il est prévu un modulateur de pression supplémentaire (8; 41) du type spécifié dans la revendication 1, et par le fait qu'un dispositif de commande de pression de la vanne de commande de remorque (16) est relié à la sortie (17) du modulateur de pression de freinage supplémentaire (8; 41).

## Revendications

1. A brake system having at least one brake circuit actuated by admission of brake pressure and having a mechanical brake pressure control arrangement (5; 5, 18; 33, 34) issuing auxiliary brake pressure, and an electrical brake pressure control arrangement (6, 8, 11, 19; 6, 8, 10, 11, 19; 6, 41, 11, 19; 6, 41, 10, 11, 19; 30, 8, 31, 19; 30, 8, 10, 31, 19) which includes at least one magnetically-actuated brake pressure modulator (8; 41) associated with the brake circuit and an electronic control assembly (11, 19; 31, 19) controlling the brake pressure modulator (8; 41), wherein the brake pressure modulator (8; 41) is connected at one input (3) to a pressure reservoir (4), at another input (9) to the mechanical brake pressure control arrangement (5; 5, 18; 33, 34) and, at its output (17) delivering the brake pressure, to the brake circuit,
characterized in that
the brake pressure modulator (8; 41) is of a construction that is also pressure-controlled which calculates the brake pressure both according to the magnetizing current strength supplied and according to the level of the auxiliary brake pressure, and the electronic control assembly (11, 19; 31, 19) is constructed so that it adjusts the magnetizing current strength to a value required to cover the particular brake pressure requirement.

2. A brake system according to claim 1, characterized in that the electronic control assembly (11, 19; 31, 19) produces a warning signal whenever the magnetizing current strength departs from a predetermined desired range.

3. A brake system according to one of Claims 1 or 2, characterized in that the brake pressure modulator (41) consists of a dual-circuit relay valve arrangement (44) and a magnetically-actuated valve arrangement (40) delivering pressure in dependence on the magnetizing current strength supplied to it and connected at its input to the one input (3), wherein the relay valve arrangement (44) is connected at its one control arrangement (42) to the output of the magnetically-actuated valve arrangement (40), at its other control arrangement (43) to the other input (9), at its output to the output (17) and at its reservoir connection to the one input (3).

4. A brake system according to one of the preceding claims, characterized in that the mechanical brake pressure control arrangement (5; 18) comprises a retention device (18) which holds back the auxiliary brake pressure up to a predetermined retention pressure.

5. A brake system according to claim 4, characterized in that the retention pressure is a function of the brake pressure issued from the brake: pressure modulator (8; 41).

6. A brake system according to one of claims 4 or 5, in which the electrical brake pressure control arrangement (6, 8, 10, 11, 19) contains a load-dependent brake pressure regulator, characterized in that the retention pressure is at most the same as the brake pressure issued from the brake: pressure modulator (8; 41) when the vehicle is unloaded.

7. A brake system according to one of claims 4 or 6, characterized in that the retention device (18) is an overflow valve.

8. A brake system according to one of claims 4 to 6, characterized in that the retention device (18) is a load/no-load valve.

9. A brake system according to one of the preceding claims, characterized in that at least in the partial braking range the brake pressure requirement is greater than the auxiliary brake pressure.

10. A brake system according to one of the preceding claims, characterized in that the brake circuit contains at least one relay valve (25; 32) the control arrangement of which is supplied with the brake pressure delivered from the brake pressure modulator (8; 41) as control pressure.

11. A brake system according to claim 10, characterized in that the relay valve (32) also serves as a magnetically-actuated control valve of an anti-lock system.

12. A brake system according to one of the preceding claims, with a pressure-controlled trailer control valve (16), characterized in that an additional brake pressure modulator (8; 41) of the kind specified in Claim 1 is provided, and a pressure control arrangement of the trailer control valve (16) is connected to the output (17) of the additional brake pressure modulator (8; 41).
